# EUROPEAN PATENT SPECIFICATION

(11) **EP 4 142 168 B1**
(45) Date of publication and mention of the grant of the patent: **04.11.2026**
(21) Application number: 21193201.7
(22) Date of filing: 26.08.2021
(51) Int. Cl.: H04B 3/54, H05B 45/32

(54) **POWER LINE COMMUNICATION SENDER AND RECEIVER**
STROMLEITUNGSKOMMUNIKATIONSSENDER UND -EMPFÄNGER
ÉMETTEUR ET RÉCEPTEUR DE COMMUNICATION DE LIGNE ÉLECTRIQUE

(43) Date of publication of application: 01.03.2023
(73) Proprietor: Power Mos Electronics Limited, Hong Kong Hong Kong SAR (China) (CN)
(72) Inventor: LAI, Cheng-Chang, Taipei City (TW)
(74) Representative: Savi, Massimiliano

(56) References cited:
- EP-A1- 2 846 611
- US-A1- 2001 049 761

## Description

### 1. Field of the Invention

The present invention relates to a sender and a receiver, particularly to a sender and a receiver for power line carried signal communication.

### 2. Description of Related Art

A lighting system usually includes a control module and multiple lighting devices. The lighting devices are electrically connected to the control module to be controlled respectively. The communication between the control module and the lighting devices may be established on a specific communication protocol, for example, a control signal sent by the control module may comprise address code and lighting command code, such that the control signal may be recognized and performed by the designated lighting device.

A method for carrying signal control on power line is a technique that transmits the control signal through the power line, so that no extra signal line is needed. In order to do this, a binary signal carried on the power line comprises of low level voltage signal and high level voltage signal, wherein the low level voltage signal is high enough to maintain the operation of the processor chip in the lighting devices, and the high level voltage signal is high enough to provide power of the lighting devices to light in all color and lightness. The defining of the binary codes by combining the low level voltage signal and high level voltage signal needs to consider both flicker frequency of the lighting devices and EMI problem.

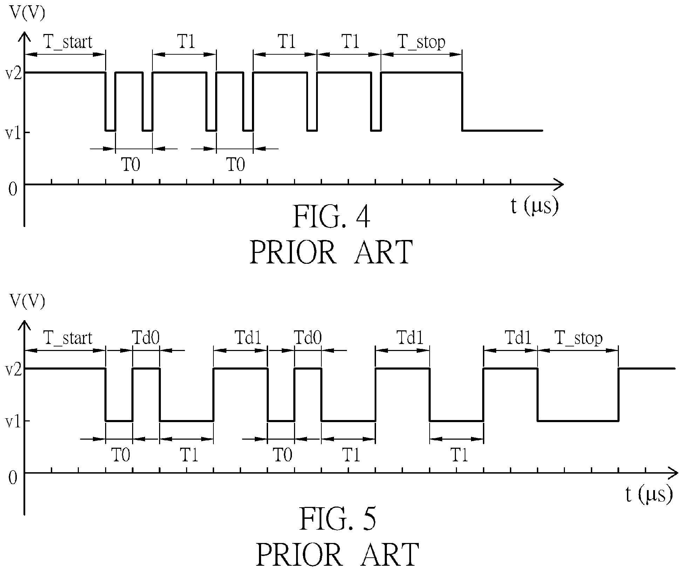

There are several different protocols commonly used to define the binary control signals on power line. With reference to FIG. 4, another method commonly used is to define the bit by the time between two successive rising edges. For example, a "0" bit is defined by time period T0 between the first and the second rising edges, and a "1" bit is defined by time period T1 between the second and the third rising edges. To provide the rising edges, a falling edge from the high level voltage signal comes shortly before every rising edge. This method ensures that the proportion of high level voltage signal is enough to provide stable power to the LED devices. However, each bit transmitted requires two short timed switching. In the example of FIG. 4, the transmitting of a 5-bit signal requires 11 switching. This method causes high EMI and signal distortion, which makes it difficult to transmit the signals to lighting devices far away in the system.

With reference to FIG. 5, a method is to define the bit by the time period of the low level voltage signal, for example, a "0" bit is transmitted by a time period T0 of low level voltage signal, and a "1" bit is transmitted by a time period T1 of low level voltage signal, while T0 ≠ T1. However, in order to ensure the power transmitted is sufficient to drive the lighting devices normally and avoid flickering caused by long time low level voltage signal, each low level voltage signal is followed with a high level voltage signal of the same length. Namely, every time period TO of low level voltage signal is followed by a time period Td0, and the time period T1 of low level voltage signal is followed by a time period Td1 of high level voltage signal, while T0=Td0 and T1=Td1, as shown in FIG. 5. However, this means every bit transmitted requires doubled time than the time that actually contains information. In the example of FIG. 5, assuming T0=Td0=3µs and T1=Td1=6µs, the transmitting of a 5-bit signal "01011" requires a total of 48µs. This method causes low efficiency and low frames per second (FPS).

EP 2846611 A1 discloses a driver circuit for a light source and method of transmitting data over a power line. With reference to FIG.5 to FIG.8 of EP 2846611 A1 and together with reference to paragraphs 0058-0061 of the specification, EP 2846611 A1 uses different switching frequencies to represent different data.

US 2001/049761 discloses an intelligent home control bus. With reference to FIG. 2 of US 2001/049761, paragraph 0086 recites "The width (the length of time "T") of all bits are same. Binary number "1" is composed by the positive or reversed (negative) pulse wave, which time length (period) is one T. Binary number "0" is composed of two pulse waves, in which each having 1/2 T time length and reversed in polarity each other. The total length of said two pulses is T)".

Therefore, the method for carrying signal control on power line is needed to be improved.

The present invention provides a power line communication sender, wherein the command signal comprises a series of alternate first level voltage signal and second level voltage signal, and the time period of each first level voltage signal and each second level voltage signal are determined according to the values of different bits in the command information.

The command information includes a series of first values and second values, that is, "0"s and "1"s. **In** the command signal that carries the command information, each "0" or "1" is represented by a time period of each low or high level voltage signal. For example, the first two bits of the command information is "01". A first level voltage signal is meant to represent the first value "0", therefore the first level voltage signal has a first time period; the following second level voltage signal is to represent the second value "1", therefore the following second level voltage signal has a second time period after the first time period.

**In** the present invention, each binary bit may be represented by the time period of each square wave formed with either the first level voltage signal or the second level voltage signal, and the value ("0" or "1") of each is determined according to the time period of each first level voltage signal or the second level voltage signal.

The present invention also provides a power line communication receiver, connected to the power line communication sender through power lines to receive power and command signals. When the power line communication receiver receives the command signal from the power line communication sender, the power line communication receiver calculates the time periods of each first level voltage signal and each second level voltage signal, and records different bits of the command signal according to the time period of each first level voltage signal and second level voltage signal.

Since the information is carried in every first level voltage signal and second level voltage signal, rather only the low level voltage signal that needs to be paired with a high level voltage signal with same time period to ensure the output power, the present invention requires only half the time to transmit the same amount of information compared to the conventional method described in Fig. 5. Furthermore, a first level voltage signal and a following second voltage are connected with a rising edge or a falling edge, depending on the relative high/low relation between the first and second level voltage signals. Namely, every bit requires only one rising/falling edge to switch to the next bit, and requires no quick switching in every binary bit of the transmitted signal. Therefore the effect of signal distortion or EMI may be lowered.

To sum up, the present invention provides a sender and a receiver implementing a new physical layer communication protocol for power line carry signal technique to transmit the information in binary bits. The required time to transmit the same information is lowered, and no high-speed switching is required. With the aforementioned advantages, the data density and transmission distance may be improved at the same time.

Other objectives, advantages and novel features of the invention will become more apparent from the following detailed description when taken in conjunction with the accompanying drawings.

### IN THE DRAWINGS

FIG. 1 is a block diagram of the sender and receiver of the present invention.
FIG. 2 is a waveform diagram of a power line carry signal technique of the present invention.

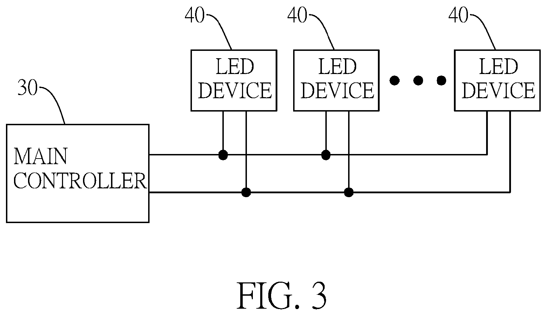

FIG. 3 is a block diagram of an embodiment of the present invention.
FIG. 4 is a waveform diagram of a conventional power line carry signal technique.
FIG. 5 is a waveform diagram of another conventional power line carry signal technique.

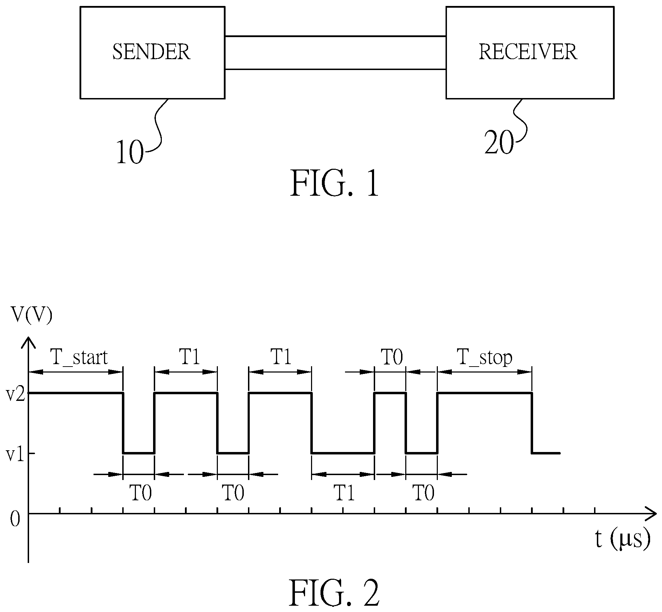

With reference to FIGs. 1 and 2, the present invention provides a power line communication sender (10) that generates a command signal according to the command information having multiple bits. The command signal carries the command information with a series of alternative first level voltage signal and second level voltage signal, in which the time period of each first level voltage signal or second level voltage signal stands for a bit in the command information. To be more specific, each first level voltage signal or second level voltage signal stands for a different bit in the command information. Namely, the time periods of each first level voltage signal and each second level voltage signal are determined according to the values of different bits in the command information.

**In** an embodiment, when the value of the first bit is a first value, the time period of the first level voltage signal corresponding to the first bit is a first time period; when the value of the first bit is a second value, the time period of the first level voltage signal corresponding to the first bit is a second time period; when the value of the second bit is the first value, the time period of the second level voltage signal corresponding to the second bit is a first time period; when the value of the second bit is the second value, the time period of the first level voltage signal corresponding to the second bit is a second time period.

**In** an embodiment, when the first time period is Aµs, the second time period may be 2Aµs, and a tail square wave signal T_stop may have a time period of 4A.Therefore, if a time period of a first level voltage signal or a second level voltage signal is the first time period, for example, 3µs, it stands for the first value, for example, "0"; if a time period of a first level voltage signal or a second level voltage signal is, for example, 6µs, it stands for a second value, for example, "1", and if a time period of a first level voltage signal or a second level voltage signal is, for example, 12µs, it indicates the end of the command signal.

Therefore, when the sender (10) sends a first bit of the command information in the command signal, the sender (10) outputs a first level voltage signal, when the sender (10) sends a second bit of the command information which follows the first bit in the command signal, the sender (10) switches to output a second level voltage signal, when the sender (10) sends a third bit of the command information, the sender (10) switches back to outputting the first level voltage signal, and so on. The time period of either the first level voltage signal or the second level voltage signal is determined according to the corresponding first bit, second bit, or the third bit.

With reference to FIG. 2, an example command information has a binary code "0101100" with 7 bits. The first level voltage signal is assumed to be a low level voltage signal (0.5V), and the second level voltage signal is assumed to be a high level voltage signal (0.8V). In an embodiment, the command signal further includes a header square wave signal T_start which may be formed with a high level voltage signal that a time period of the header square wave signal lasts for a third time period, for example, 9µs, and a tail square wave signal T_stop with a high level voltage signal or a low level voltage signal that a time period of the tail square wave signal lasts for a fourth time period, for example 12µs. After an initial header square wave signal T_start of 0.8V, the first bit of the command information "0" is outputted with 3 µs of first level voltage signal 0.5V, the second bit of the command information "1" is outputted with 6µs of second level voltage signal 0.8V, the third bit of the command information "0" is outputted with 3µs of first level voltage signal 0.5V, the fourth bit of the command information "1" is outputted with 6µs of second level voltage signal 0.8V, and the fifth bit of the command information "1" is outputted with 6µs of second level voltage signal 0.8V, the sixth bit of the command information "0" is outputted with 3µs of first level voltage signal 0.5V, and the seventh bit of the command information "0" is outputted with 3µs of second level voltage signal 0.8V. Finally, the command signal is ended with the tail square wave signal T_stop of 12µs.

In this example, the transmitting of 7-bit signal "0101100" requires only 30µs and 7 switching, which clearly reduces both the transmitting time and switching times.

A power line communication receiver (20) in the present invention is also described herein. The receiver (20) is electrically connected to the sender (10) through power lines, and receives the command signal from the sender (10). The receiver (20) calculates the time period of each first level voltage signal and second level voltage signal, and records each corresponding bits according to the time period of each first level voltage signal and second level voltage signal.

That is, when the time period of the first level voltage signal or the second level voltage signal is a first time period, the power line communication receiver (20) records a first value; when the time period of the first level voltage signal or the second level voltage signal is a second time period, the power line communication receiver (20) records a second value.

To be more specific, since the time periods of each first level voltage signal and each second level voltage signal are determined according to the values of different bits in the command information when sent by the sender (10), the receiver (20) records different bits according to each first level voltage signal and each second level voltage signal in the command signal.

To be more specific, the receiver (20) detects each falling and rising edge, calculates the time interval between a rising/falling edge and the successive falling/rising edge, which is a time period of a first level voltage signal or a second level voltage signal, and records the binary bit according to the time period. For example, if the time period between a rising/falling edge and the successive falling/rising edge is the first time period, the receiver (20) records a first value, perhaps a "0"; if the time period between a rising/falling edge and the successive falling/rising edge is the second time period, the receiver (20) records a second value, perhaps a "1".

In an embodiment of the present invention, the sender (10) may be a main controller (30) of a light-emitting diode (LED) lighting system, and the receiver (20) is the LED device (40) of the LED lighting system. The LED lighting system may include multiple LED devices (40), and the LED devices (40) are connected in parallel to the power lines. The command information of the main controller (30) may include an address code and a lighting code. The main controller (30), as the sender (10), generates the command signal in the order of: a header code, the address code, the lighting code, and a tail code. The header code corresponds to sending the header square wave signal, and the tail code corresponds to sending the tail square wave signal. The LED device (40) may include a processor unit, a memory unit and an LED unit, the memory unit is connected to the processor unit and stores an identity code of the LED device (40). When the LED devices (40) receive the command signal, each processor unit records the address code and the lighting code contained in the command signal, and checks if the address code corresponds to an identity code stored in its own memory unit. If the address code corresponds to an identity code, the LED device (40) acknowledges the lighting code and controls the lighting accordingly.

For example, the address code may be an 8-bit address code to present 256 different addresses, or a 9-bit address code to present 512 different addresses, and the main controller (30) may control 256 or 512 LED devices (40) individually. The lighting code may include an 8-bit dimming code to represent a 256 grey-scale for each of a red LED unit, a blue LED unit, and a green LED unit.

## Claims

1. A power line communication sender (10), **characterized in that** the sender (10) generates a command signal according to a command information having multiple bits; wherein
the command signal comprises a series of alternate first level voltage signals and second level voltage signals, and time periods of each first level voltage signal and each second level voltage signal are determined according to values of different bits in the command information **characterised by**;
when the power line communication sender (10) sends a first bit of the command information in the command signal, the power line communication sender (10) outputs the first level voltage signal;
when the power line communication sender (10) sends a second bit of the command information following the first bit in the command signal, the power line communication sender (10) outputs the second level voltage signal;
wherein the time period of the first level voltage signal corresponding to the first bit is determined according to the value of the first bit, and the time period of the second level voltage signal corresponding to the second bit is determined according to the value of the second bit.

2. The power line communication sender (10) as claimed in claim 1, **characterized in that**
when the value of the first bit is a first value, the time period of the first level voltage signal corresponding to the first bit is a first time period;
when the value of the first bit is a second value, the time period of the first level voltage signal corresponding to the first bit is a second time period;
when the value of the second bit is the first value, the time period of the second level voltage signal corresponding to the second bit is the first time period;
when the value of the second bit is the second value, the time period of the first level voltage signal corresponding to the second bit is the second time period.

3. The power line communication sender (10) as claimed in claim 1, **characterized in that** the command signal further comprises:
a header square wave signal, wherein a time period of the header square wave signal is a third time period;
a tail square wave signal, wherein a time period of the tail square wave signal is a fourth time period;
wherein the third time period and the fourth time period are different to the first time period and the second time period.

4. The power line communication sender (10) as claimed in claim 3, **characterized in that** the first level voltage signal is a low level voltage signal and the second level voltage signal is a high level voltage signal.

5. The power line communication sender (10) as claimed in claim 1, **characterized in that** the power line communication sender (10) is a main controller of a lighting system, and the command information includes an address code and a lighting code;
the power line communication sender (10) generates the command signal according to the command information in the order of: a header code, the address code, the lighting code, and a tail code.

6. The power line communication sender (10) as claimed in claim 3, **characterized in that** the power line communication sender (10) is a main controller of a lighting system, and the command information includes an address code and a lighting code;
the power line communication sender (10) generates the command signal according to the command information in the order of: a header code, the address code, the lighting code, and a tail code.

7. The power line communication sender (10) as claimed in claim 1, **characterized in that** the time periods of each first level voltage signal and each second level voltage signal are determined according to the values of different bits in the command information.

8. A power line communication receiver (20), **characterized in that** the power line communication receiver (20) is connected to a power line communication sender (10) through power lines to receive power and command signals **characterised by**:
when the power line communication receiver (20) receives the command signal from the power line communication sender (10), the power line communication receiver (20) calculates the time periods of each first level voltage signal and second level voltage signal, and records different bits of the command signal according to the time periods of each corresponding first level voltage signal and each corresponding second level voltage signal;
when the time period of the first level voltage signal or the second level voltage signal is a first time period, the power line communication receiver (20) records a first value;
when the time period of the first level voltage signal or the second level voltage signal is a second time period, the power line communication receiver (20) records a second value.

9. The power line communication receiver (20) as claimed in claim 8, **characterized in that** the power line communication receiver (20) is a light emitting diode (LED) device, comprising
a processor unit;
a memory unit, connected to the processor unit and storing an identity code; and
an LED unit, connected to the processor unit,
when the power line communication receiver (20) receives the command signal, the processor unit records an address code and a lighting code contained in the command signal, and determines if the address code corresponds to the identity code stored in the memory unit;
if the address code corresponds to the identity code, the processor unit acknowledges the address code and controls the LED unit according to the lighting code.

10. The power line communication receiver (20) as claimed in claim 8, **characterized in that** the receiver (20) records different bits according to each first level voltage signal and each second level voltage signal in the command signal.

## Patentansprüche

1. Stromleitungskommunikationssender (10), **dadurch gekennzeichnet, dass** der Sender (10) ein Befehlssignal gemäß einer Befehlsinformation mit mehreren Bits erzeugt; wobei
das Befehlssignal eine Reihe von abwechselnden Signalen einer ersten Spannungsstufe und Signalen einer zweiten Spannungsstufe umfasst und Zeitspannen jedes Signals der ersten Spannungsstufe und jedes Signals der zweiten Spannungsstufe gemäß Werten verschiedener Bits in der Befehlsinformation bestimmt werden, **dadurch gekennzeichnet, dass**,
wenn der Stromleitungskommunikationssender (10) ein erstes Bit der Befehlsinformation in dem Befehlssignal sendet, der Stromleitungskommunikationssender (10) das Signal der ersten Spannungsstufe ausgibt;
wenn der Stromleitungskommunikationssender (10) ein auf das erste Bit folgendes zweites Bit der Befehlsinformation in dem Befehlssignal sendet, der Stromleitungskommunikationssender (10) das Signal der zweiten Spannungsstufe ausgibt;
wobei die Zeitspanne des dem ersten Bit entsprechenden Signals der ersten Spannungsstufe gemäß dem Wert des ersten Bits bestimmt wird und die Zeitspanne des dem zweiten Bit entsprechenden Signals der zweiten Spannungsstufe gemäß dem Wert des zweiten Bits bestimmt wird.

2. Stromleitungskommunikationssender (10) nach Anspruch 1, **dadurch gekennzeichnet, dass**
wenn der Wert des ersten Bits ein erster Wert ist, die Zeitspanne des dem ersten Bit entsprechenden Signals der ersten Spannungsstufe eine erste Zeitspanne ist;
wenn der Wert des ersten Bits ein zweiter Wert ist, die Zeitspanne des dem ersten Bit entsprechenden Signals der ersten Spannungsstufe eine zweite Zeitspanne ist;
wenn der Wert des zweiten Bits der erste Wert ist, die Zeitspanne des dem zweiten Bit entsprechenden Signals der zweiten Spannungsstufe die erste Zeitspanne ist;
wenn der Wert des zweiten Bits der zweite Wert ist, die Zeitspanne des dem zweiten Bit entsprechenden Signals der ersten Spannungsstufe die zweite Zeitspanne ist.

3. Stromleitungskommunikationssender (10) nach Anspruch 1, **dadurch gekennzeichnet, dass** das Befehlssignal ferner umfasst:
ein Header-Rechteckwellensignal, wobei eine Zeitspanne des Header-Rechteckwellensignals eine dritte Zeitspanne ist;
ein Tail-Rechteckwellensignal, wobei eine Zeitspanne des Tail-Rechteckwellensignals eine vierte Zeitspanne ist;
wobei die dritte Zeitspanne und die vierte Zeitspanne sich von der ersten Zeitspanne und der zweiten Zeitspanne unterscheiden.

4. Stromleitungskommunikationssender (10) nach Anspruch 3, **dadurch gekennzeichnet, dass** das Signal der ersten Spannungsstufe ein Signal einer niedrigen Spannungsstufe ist und das Signal der zweiten Spannungsstufe ein Signal einer hohen Spannungsstufe ist.

5. Stromleitungskommunikationssender (10) nach Anspruch 1, **dadurch gekennzeichnet, dass** der Stromleitungskommunikationssender (10) eine Hauptsteuerung eines Beleuchtungssystems ist und die Befehlsinformation einen Adresscode und einen Beleuchtungscode enthält;
der Stromleitungskommunikationssender (10) das Befehlssignal gemäß der Befehlsinformation in der Reihenfolge erzeugt: einen Header-Code, den Adresscode, den Beleuchtungscode und einen Tail-Code.

6. Stromleitungskommunikationssender (10) nach Anspruch 3, **dadurch gekennzeichnet, dass** der Stromleitungskommunikationssender (10) eine Hauptsteuerung eines Beleuchtungssystems ist und die Befehlsinformation einen Adresscode und einen Beleuchtungscode enthält;
der Stromleitungskommunikationssender (10) das Befehlssignal gemäß der Befehlsinformation in der Reihenfolge erzeugt: einen Header-Code, den Adresscode, den Beleuchtungscode und einen Tail-Code.

7. Stromleitungskommunikationssender (10) nach Anspruch 1, **dadurch gekennzeichnet, dass** die Zeitspannen jedes Signals der ersten Spannungsstufe und jedes Signals der zweiten Spannungsstufe gemäß den Werten verschiedener Bits in der Befehlsinformation bestimmt werden.

8. Stromleitungskommunikationsempfänger (20), **dadurch gekennzeichnet, dass** der Stromleitungskommunikationsempfänger (20) über Stromleitungen mit einem Stromleitungskommunikationssender (10) verbunden ist, um Strom und Befehlssignale zu empfangen, **dadurch gekennzeichnet, dass**:
wenn der Stromleitungskommunikationsempfänger (20) das Befehlssignal von dem Stromleitungskommunikationssender (10) empfängt, der Stromleitungskommunikationsempfänger (20) die Zeitspannen jedes Signals der ersten Spannungsstufe und des Signals der zweiten Spannungsstufe berechnet und verschiedene Bits des Befehlssignals gemäß den Zeitspannen jedes entsprechenden Signals der ersten Spannungsstufe und jedes entsprechenden Signals der zweiten Spannungsstufe aufzeichnet;
wenn die Zeitspanne des Signals der ersten Spannungsstufe oder des Signals der zweiten Spannungsstufe eine erste Zeitspanne ist, der Stromleitungskommunikationsempfänger (20) einen ersten Wert aufzeichnet;
wenn die Zeitspanne des Signals der ersten Spannungsstufe oder des Signals der zweiten Spannungsstufe eine zweite Zeitspanne ist, der Stromleitungskommunikationsempfänger (20) einen zweiten Wert aufzeichnet.

9. Stromleitungskommunikationsempfänger (20) nach Anspruch 8, **dadurch gekennzeichnet, dass** der Stromleitungskommunikationsempfänger (20) eine Leuchtdioden-Vorrichtung (LED-Vorrichtung) ist, umfassend
eine Prozessoreinheit;
eine Speichereinheit, die mit der Prozessoreinheit verbunden ist und einen Identitätscode speichert; und
eine LED-Einheit, die mit der Prozessoreinheit verbunden ist,
wenn der Stromleitungskommunikationsempfänger (20) das Befehlssignal empfängt, zeichnet die Prozessoreinheit einen in dem Befehlssignal enthaltenen Adresscode und Beleuchtungscode auf und bestimmt, ob der Adresscode dem in der Speichereinheit gespeicherten Identitätscode entspricht;
falls der Adresscode dem Identitätscode entspricht, bestätigt die Prozessoreinheit den Adresscode und steuert die LED-Einheit gemäß dem Beleuchtungscode.

10. Stromleitungskommunikationsempfänger (20) nach Anspruch 8, **dadurch gekennzeichnet, dass** der Empfänger (20) verschiedene Bits gemäß jedem Signal der ersten Spannungsstufe und jedem Signal der zweiten Spannungsstufe in dem Befehlssignal aufzeichnet.

## Revendications

1. Émetteur de communication par courants porteurs en ligne (10), **caractérisé en ce que** l'émetteur (10) génère un signal de commande selon une information de commande ayant plusieurs bits ; dans lequel
le signal de commande comprend une série de signaux de tension de premier niveau et de signaux de tension de deuxième niveau alternés, et des durées de chaque signal de tension de premier niveau et de chaque signal de tension de deuxième niveau sont déterminées selon des valeurs de différents bits dans l'information de commande, **caractérisé par** :
lorsque l'émetteur de communication par courants porteurs en ligne (10) envoie un premier bit de l'information de commande dans le signal de commande, l'émetteur de communication par courants porteurs en ligne (10) délivre en sortie le signal de tension de premier niveau ;
lorsque l'émetteur de communication par courants porteurs en ligne (10) envoie un deuxième bit de l'information de commande suivant le premier bit dans le signal de commande, l'émetteur de communication par courants porteurs en ligne (10) délivre en sortie le signal de tension de deuxième niveau ;
dans lequel la durée du signal de tension de premier niveau correspondant au premier bit est déterminée selon la valeur du premier bit, et la durée du signal de tension de deuxième niveau correspondant au deuxième bit est déterminée selon la valeur du deuxième bit.

2. Émetteur de communication par courants porteurs en ligne (10) selon la revendication 1, **caractérisé en ce que**
lorsque la valeur du premier bit est une première valeur, la durée du signal de tension de premier niveau correspondant au premier bit est une première durée ;
lorsque la valeur du premier bit est une deuxième valeur, la durée du signal de tension de premier niveau correspondant au premier bit est une deuxième durée ; lorsque la valeur du deuxième bit est la première valeur, la durée du signal de tension de deuxième niveau correspondant au deuxième bit est la première durée ; lorsque la valeur du deuxième bit est la deuxième valeur, la durée du signal de tension de premier niveau correspondant au deuxième bit est la deuxième durée.

3. Émetteur de communication par courants porteurs en ligne (10) selon la revendication 1, **caractérisé en ce que** le signal de commande comprend en outre :
un signal d'onde carrée d'en-tête, dans lequel une durée du signal d'onde carrée d'en-tête est une troisième durée ;
un signal d'onde carrée de fin, dans lequel une durée du signal d'onde carrée de fin est une quatrième durée ;
dans lequel la troisième durée et la quatrième durée sont différentes de la première durée et de la deuxième durée.

4. Émetteur de communication par courants porteurs en ligne (10) selon la revendication 3, **caractérisé en ce que** le signal de tension de premier niveau est un signal de tension de niveau bas et le signal de tension de deuxième niveau est un signal de tension de niveau haut.

5. Émetteur de communication par courants porteurs en ligne (10) selon la revendication 1, **caractérisé en ce que** l'émetteur de communication par courants porteurs en ligne (10) est un contrôleur principal d'un système d'éclairage, et l'information de commande comprend un code d'adresse et un code d'éclairage ; l'émetteur de communication par courants porteurs en ligne (10) génère le signal de commande selon l'information de commande dans l'ordre d'un code d'en-tête, du code d'adresse, du code d'éclairage et d'un code de fin.

6. Émetteur de communication par courants porteurs en ligne (10) selon la revendication 3, **caractérisé en ce que** l'émetteur de communication par courants porteurs en ligne (10) est un contrôleur principal d'un système d'éclairage, et l'information de commande comprend un code d'adresse et un code d'éclairage ; l'émetteur de communication par courants porteurs en ligne (10) génère le signal de commande selon l'information de commande dans l'ordre de : un code d'en-tête, le code d'adresse, le code d'éclairage et un code de fin.

7. Émetteur de communication par courants porteurs en ligne (10) selon la revendication 1, **caractérisé en ce que** les durées de chaque signal de tension de premier niveau et de chaque signal de tension de deuxième niveau sont déterminées selon les valeurs de différents bits dans l'information de commande.

8. Récepteur de communication par courants porteurs en ligne (20), **caractérisé en ce que** le récepteur de communication par courants porteurs en ligne (20) est connecté à un émetteur de communication par courants porteurs en ligne (10) par l'intermédiaire de lignes électriques pour recevoir de l'énergie et des signaux de commande, **caractérisé par** :
lorsque le récepteur de communication par courants porteurs en ligne (20) reçoit le signal de commande en provenance de l'émetteur de communication par courants porteurs en ligne (10), le récepteur de communication par courants porteurs en ligne (20) calcule les durées de chaque signal de tension de premier niveau et signal de tension de deuxième niveau, et enregistre différents bits du signal de commande selon les durées de chaque signal de tension de premier niveau correspondant et de chaque signal de tension de deuxième niveau correspondant ;
lorsque la durée du signal de tension de premier niveau ou du signal de tension de deuxième niveau est une première durée, le récepteur de communication par courants porteurs en ligne (20) enregistre une première valeur ;
lorsque la durée du signal de tension de premier niveau ou du signal de tension de deuxième niveau est une deuxième durée, le récepteur de communication par courants porteurs en ligne (20) enregistre une deuxième valeur.

9. Récepteur de communication par courants porteurs en ligne (20) selon la revendication 8, **caractérisé en ce que** le récepteur de communication par courants porteurs en ligne (20) est un dispositif à diodes électroluminescentes (DEL), comprenant
une unité de traitement;
une unité de mémoire, connectée à l'unité de traitement et stockant un code d'identité ; et
une unité de DEL, connectée à l'unité de traitement,
lorsque le récepteur de communication par courants porteurs en ligne (20) reçoit le signal de commande, l'unité de traitement enregistre un code d'adresse et un code d'éclairage contenus dans le signal de commande, et détermine si le code d'adresse correspond au code d'identité stocké dans l'unité de mémoire ;
si le code d'adresse correspond au code d'identité, l'unité de traitement valide le code d'adresse et commande l'unité de DEL selon le code d'éclairage.

10. Récepteur de communication par courants porteurs en ligne (20) selon la revendication 8, **caractérisé en ce que** le récepteur (20) enregistre différents bits selon chaque signal de tension de premier niveau et chaque signal de tension de deuxième niveau dans le signal de commande.
